Europäisches Patentamt

European Patent Office

Office européen des brevets

(11) Veröffentlichungsnummer : **0 127 722**
**B1**

(12) # EUROPÄISCHE PATENTSCHRIFT

(45) Veröffentlichungstag der Patentschrift :
23.12.87

(51) Int. Cl.⁴ : **B 01 D  5/00**, B 01 D  9/00,
D 01 F 13/02

(21) Anmeldenummer : 84100340.3

(22) Anmeldetag : 13.01.84

(54) **Verfahren zur mehrstufigen Mischkondensation von Dämpfen.**

(30) Priorität : 04.05.83 DE 3316330

(43) Veröffentlichungstag der Anmeldung :
12.12.84 Patentblatt 84/50

(45) Bekanntmachung des Hinweises auf die Patenterteilung : 23.12.87 Patentblatt 87/52

(84) Benannte Vertragsstaaten :
AT CH DE FR LI

(56) Entgegenhaltungen :
EP-A- 0 007 835
DE-A- 1 760 284
DE-A- 2 938 549
DE-C- 1 084 239
US-A- 2 088 601
US-A- 4 276 117

(73) Patentinhaber : Ebner & Co. KG Anlagen und Apparate
Industriestrasse 8
D-6419 Eiterfeld (DE)

(72) Erfinder : Ebner, Karl
Theodor-Heuss-Strasse 3
D-6370 Oberursel/Ts. (DE)
Erfinder : Ebner, Stefan, Dipl.-Ing.
Theodor-Heuss-Strasse 3
D-6370 Oberursel/Ts. (DE)

(74) Vertreter : Jaeger, Klaus, Dipl.-Chem. Dr. et al
JAEGER & PARTNER Patentanwälte Pippinplatz 4a
D-8035 Gauting (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft ein Verfahren zur mehrstufigen Mischkondensation von Dämpfen mit Kühllösungen der im Oberbegriff des Anspruchs 1 genannten Art. Außerdem betrifft die Erfindung eine Anlage zur Durchführung dieses Verfahrens und die Verwendung des Verfahrens und der Anlage beim Regenerieren von Spinnbadflüssigkeit. Speziell betrifft die Erfindung ein Verfahren zur mehrstufigen Mischkondensation der beim Regenerieren von Spinnbadflüssigkeit aus Viskosespinnanlagen entstehenden Brüden, insbesondere mit Natronlauge.

Beim Regenerieren von Spinnbadlösungen aus der Viskoseherstellung durch Vakuumkristallisation ist es gebräuchlich, den entstehenden Brüden unter Verwendung von Schwefelsäure oder Natronlauge zu kondensieren. Während bei der Verwendung von Schwefelsäure als Kondensationsmittel der kondensierte Wasserdampf später in einer nachfolgenden Stufe wieder durch Arbeitsdampf aus dem Spinnbad ausgetrieben werden muß, hat die Verwendung von Natronlauge zur Kondensation der bei der Vakuumkristallisation aus Spinnbadlösungen entstehenden Vakuumdämpfe den großen Vorteil, daß die als Kondensationsmittel eingesetzte Natronlauge wieder zur Viskoseherstellung rückgeführt werden kann.

Da aber die für die Viskoseherstellung eingesetzte Natronlauge eine hohe Reinheit aufweisen muß, ist es erforderlich, den bei der Vakuumkühlung entstehenden Brüden vor seiner Kondensation zu reinigen. Dies erfolgt zweckmäßigerweise ebenfalls unter Verwendung von Natronlauge als Waschflüssigkeit, wobei dann gegebenenfalls in den Vakuumdämpfen noch vorhandener Schwefelwasserstoff gleichzeitig ausgewaschen werden kann. Auch wird dabei die gegebenenfalls in dem Brüden noch vorhandene Restschwefelsäure neutralisiert.

Dieses zuletzt beschriebene Verfahren weist zwar den Vorteil einer signifikanten Energieeinsparung auf, nämlich der Einsparung der zum Betrieb der Dampfstrahlapparate erforderlichen Energie, die zum Absaugen der beim Abkühlen des Spinnbades entstehenden Brüden erforderlich ist. Nachteilig an diesem Verfahren ist jedoch der relativ hohe Verbrauch an Natronlauge.

Wird beispielsweise ein Spinnbad von 50 °C auf 0 °C abgekühlt, dann hat der in der letzten Stufe der Vakuumkühlanlage entstehende Brüden eine Temperatur von ca. —4 °C. Wird zur Kondensation dieses Brüden eine Natronlauge verwendet, die mit —3 °C in den Mischkondensator eintritt und nach Wärmeaustausch mit einer Temperatur von 0 °C den Mischkondensator wieder verläßt, dann erfordert dies eine Natronlauge, die eine Siedepunktserhöhung von ungefähr 6 °C gegenüber reinem Wasser aufweist, erfordert also eine Laugenkonzentration von 16 Gew.-% NaOH.

Gebräuchlicherweise wird die Kondensation der bei der Abkühlung von Spinnbadlösungen entstehenden Dämpfe mehrstufig durchgeführt, wobei zweckmäßigerweise jeder Stufe der Abkühlungsanlage ein eigener Laugenkondensator zugeordnet ist. Bei einer solchen mehrstufigen Anlage findet die in dem vorstehenden Beispiel mit praxisnahen Daten erwähnte Erwärmung der Natronlauge von —3 °C auf 0 °C stufenweise statt, so daß beispielsweise in der ersten, kältesten Stufe nur eine Erwärmung der als Kondensationsmittel umlaufenden Natronlauge von —3 °C auf —2,4 °C stattfindet, wobei bei diesem Beispiel von einer gebräuchlichen Auslegung der Anlage mit fünf Kühlstufen ausgegangen wird. Die Natriumhydroxidkonzentration in der als Kühllauge verwendeten Natronlauge kann dadurch von 16 Gew.-% auf 14 Gew.-% verringert werden. Da bedeutet zwar schon eine beträchtliche Einsparung an Natronlauge, jedoch sind auch die für die 14-prozentige Natronlauge im Rahmen der Viskoseherstellung aufzuwendenden Verfahrenskosten so groß, daß nach wie vor ein dringender Bedarf besteht, diese Kosten weiter zu senken.

Angesichts dieses Standes der Technik liegt der Erfindung die Aufgabe zugrunde, ein Verfahren und eine Vorrichtung zur mehrstufigen Mischkondensation von Dämpfen im allgemeinen und speziell zur mehrstufigen Mischkondensation der bei der Regenerierung von Spinnbadlösungen aus Viskosespinnanlagen entstehenden Dämpfe mit Kühllösungen, speziell mit Natronlauge, sowie eine Anlage zur Durchführung dieses Verfahrens zu schaffen, mit denen eine weitere Einsparung an Solvendum der Kühllösung, speziell NaOH, mit wirtschaftlich vertretbaren Mitteln erzielt werden kann.

Zur Lösung dieser Aufgabe wird ein Verfahren der eingangs genannten Art geschaffen, das erfindungsgemäß die im kennzeichnenden Teil des Anspruchs 1 genannten Merkmale aufweist. Die durch die Erfindung geschaffene Anlage speziell zum Regenerieren von Spinnbadflüssigkeit aus Viskosespinnanlagen weist die im kennzeichnenden Teil des Anspruchs 7 genannten Merkmale auf.

Weitere Ausgestaltungen der Erfindung sind Gegenstand der Unteransprüche.

Die Erfindung ist also wesentlich dadurch gekennzeichnet, daß in einer Anlage zur mehrstufigen Mischkondensation von Dämpfen, die in mehreren, in Reihe aufeinanderfolgenden Dampfquellen, beispielsweise Vakuumkristallisatoren, entstehen, über jeden jeder einzelnen dieser Stufen zugeordneten Mischkondensator eine Kühllösung oder Kühllauge in einem separaten Kreislauf geführt wird, und daß der bei der Mischkondensation in einem solchen Mischkondensatorkreislauf im wesentlichen durch die Kondensation der Dämpfe entstehende Überlauf in den nächstwärmeren Mischkondensatorkreislauf der Reihenschaltung überführt wird. Da die Brüdentemperatur in den aufeinanderfolgenden Mischkondensatoren einer mehrstufigen Anlage mit mehrstufiger Dampferzeugung und Dampfkondensation der in Rede stehenden Art abnimmt, kann in den aufeinanderfolgenden Mischkondensatoren auch mit stets geringerer Konzentration des Solvendums in der Kühllösung, speziell also mit zunehmend geringeren Natronlaugekonzentrationen, gearbeitet werden. Dies bedingt beispielsweise bei einer Verwendung von fünf hintereinandergeschalteten Kühlstufen mit jeweils eigenen und in der beschriebenen Weise über ihre Überläufe miteinander in Verbindung stehenden Mischkondensatoren, daß im letzten Mischkondensator mit einer Laugenkonzentration von nur noch 10 Gew.-% gearbeitet werden kann. Aus diesem letzten Mischkondensator läuft dann der in den einzelnen Kondensatoren kondensierte Wasserdampf mit einer Konzentration von 10 Gew.-% Solvendum, speziell also NaOH, ab. Dies bedeutet im Fall der Kondensation der beim Regenerieren von Spinnbadlösungen entstehenden Dämpfe mit Natronlauge gegenüber den sonst benötigten mindestens 14 Gew.-% NaOH eine wesentliche Einsparung, die sich in der Gesamtbilanz der Viskoseherstellung spürbar bemerkbar macht.

Nach einer Ausgestaltung der Erfindung wird die aus dem wärmsten Mischkondensatorkreislauf abgezogene Kühllösung im Fall der Zellwollfabriken nicht verworfen, sondern zur Abluftreinigung, insbesondere zur Rückgewinnung von Schwefelkohlenstoff und Schwefelwasserstoff aus der Abluft, eingesetzt. Beim Waschen der abgesaugten Abluft mit der aus dem wärmsten Mischkondensatorkühlkreislauf abgezogenen 10-prozentigen wässrigen Natronlauge wird der gesamte Schwefelwasserstoff aus der Abluft absorbiert. Die so vorgereinigte Abluft wird dann weitergekühlt, vorzugsweise mit Wasser, und anschließend zur Adsorbtion des restlichen Schwefelkohlenstoffs über einen Aktivkohlefilter geleitet.

Die Erfindung ist im folgenden anhand eines Ausführungsbeispiels unter Bezug auf die Anwendung des Verfahrens auf die bei der Regenerierung von Spinnbadlösungen aus Viskosespinnanlagen entstehenden Dämpfe in Verbindung mit der Zeichnung näher erläutert. Es zeigt die einzige Figur, nämlich die

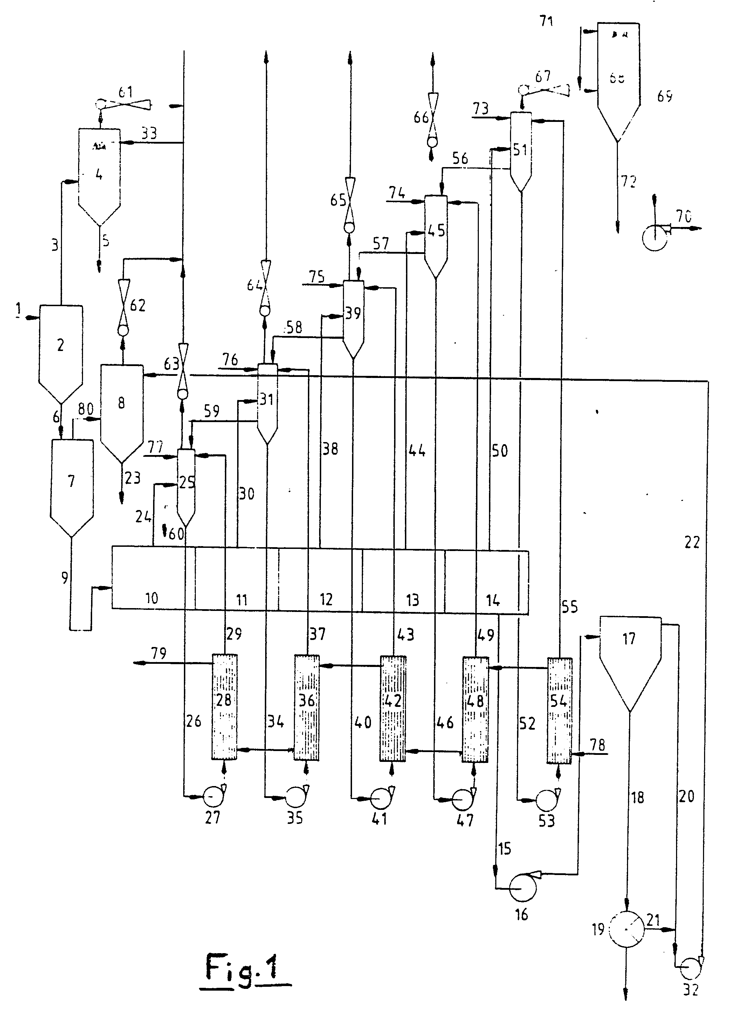

Fig. 1 in schematischer Darstellung ein Blockschaltbild einer Anlage zur Durchführung des Verfahrens der Erfindung.

Das in der Fig. 1 gezeigte Ausführungsbeispiel zeigt eine Anlage zum stufenweisen Abkühlen einer Viskosespinnbadlösung mit Brüdenkondensation in und für jede Abkühlungsstufe.

Die abzukühlende Spinnbadlösung wird über eine Zulaufleitung 1 dem Vorkühler 2 zugeführt und dort auf 30 °C abgekühlt.

Der bei dieser Abkühlung entstehende Brüden wird über eine Rohrleitung 3 einem Wassermischkondensator 4 zugeführt und dort mit Kühlwasser kondensiert, das über eine Zulaufleitung 33 in den Mischkondensator 4 eintritt und diesen über eine Abzugsleitung 5 verläßt.

Das im ersten Vorkühler 2 vorgekühlte Spinnbad wird über eine Rohrleitung 6 in einen nachgeschalteten zweiten Vorkühler 7 überführt. Der im zweiten Vorkühler 7 entstehende Brüden wird über eine Rohrleitung 80 einem Laugenmischkondensator 8 zugeführt und dort mit der regenerierten, also vom Salz befreiten abgekühlten Mutterlauge kondensiert.

Das nunmehr auf 20 °C vorgekühlte Spinnbad wird über eine Rohrleitung 9 aus dem zweiten Vorkühler 7 in die erste von fünf aufeinanderfolgenden Kristallisatorstufen 10, 11, 12, 13 und 14 überführt. In diesen fünf Kristallisatorstufen findet eine stufenweise Abkühlung der Spinnbadlösung auf 0 °C statt. Das auf 0 °C abgekühlte Spinnbad wird dann über eine Rohrleitung 15 und eine Pumpe 16 in einen Eindicker 17 überführt. Das Konzentrat der Spinnbadlösung wird dann über eine Abzugsleitung 18 in eine Zentrifuge 19 überführt. Die über dem Eindicker 17 ablaufende klare Lauge wird über eine Leitung 20 mit der über eine Rohrleitung 21 zugeführten Schleuderlauge aus der Zentrifuge vereinigt und über eine Förderpumpe 32 und eine Druckleitung 22 als Kondensationsmittel in den Mischkondensator 8 überführt.

Der in der ersten Kühlstufe 10 entstehende Brüden wird über eine Rohrleitung 24 einem ersten Mischkondensator 25 zugeführt. Über die Leitung 26 wird unter Zwischenschaltung einer Pumpe 27 und eines Rückkühlers 28 sowie eine Rücklaufleitung 29 ein Mischkondensatorkreislauf für die Kühllösung, hier speziell die Natronlauge, hergestellt. Auf diese Weise ist eine kontinuierliche Kondensation des in der Kristallisatorstufe 10 entstehenden Brüdens gewährleistet.

In gleicher Weise weist die zweite Kühlstufe 11 eine Brüdenabzugsleitung 30, einen Mischkondensator 31, eine Ablaufleitung 34, eine Pumpe 35, einen Rückkühler 36 und eine Rückführungsleitung 37 zum Mischkondensator 31 auf.

Der in der dritten Kristallisatorstufe 12 entstehende Brüden gelangt über eine Leitung 38 in den Mischkondensator 39, dessen Kondensat über eine Ablaufleitung 40, eine Pumpe 41, einen Rückkühler 42 und eine Rücklaufleitung 43 mit der Kühllösung bzw. Kühllauge im Kreislauf geführt wird.

Der Brüden aus der vierten Kristallisatorstufe 13 wird über eine Rohrleitung 44 auf den Laugenkondensator 45 gegeben und dort kondensiert. Die das Kondensat mitführende Kühllösung läuft über eine Ablaufleitung 46, eine Pumpe 47 und einen Rückkühler 48 sowie die Rücklaufleitung 49 wieder zum Mischkühler 45 zurück.

In gleicher Weise wird der in der fünften und letzten Kühlstufe 14 entstehende Brüden über eine Abzugsleitung 50 in einen Mischkondensator 51 überführt und dort mit einer Kühllösung, hier Natronlauge, kondensiert, die mit dem Kondensat über eine Ablaufleitung 52, eine Pumpe 53, einen Rückkühler 54 und eine Rücklaufleitung 55 wieder zum fünften Mischkondensator 51 rückgeführt und umgewälzt wird.

Das in dem vorstehend beschriebenen letzten Mischkondensatorkreislauf durch die Kondensation des Brüden aus der fünften Kristallisatorstufe 14 entstehende Überlaufvolumen wird über eine Überlaufleitung 56 aus dem fünften Mischkondensatorkreislauf, hier direkt aus dem fünften Mischkondensator 51, in den nächst wärmeren vierten Mischkondensatorkreislauf, hier also direkt in den vierten Mischkondensator 45, überführt. Der in diesem Mischkondensatorkreislauf primär durch die Brüdenkondensation entstehende Laugenüberlauf wird über eine Überlaufleitung 57 in den dritten Mischkondensatorkreislauf, hier den dritten Mischkondensator 39, überführt. Der hier entstehende Überlauf wird über eine Überlaufleitung 58 in den zweiten Mischkondensator 31 und der in diesem entstehende Überlauf über eine Überlaufleitung 59 in den ersten Mischkondensator 25 überführt. Aus diesem ersten Mischkondensator 25 wird dann als Überlauf über eine Abzugsleitung 60 die in der Gesamtanlage insgesamt kondensierte Brüdenmenge mit einer relativ geringen Natriumhydroxidkonzentration abgezogen und der weiteren Verwendung zugeführt.

Die einzelnen Kondensatoren werden vorzugsweise durch einzeln zugeordnete Dampfstrahlapparate 61, 62, 63, 64, 65, 66 und 67 entlüftet, die in einen Hilfskondensator 68 fördern, in dem der Treibdampf durch Kühlwasser kondensiert wird, das über eine Zulaufleitung 71 zugeführt und über eine Ablaufleitung 72 den Kondensator 68 wieder verläßt. Die Belüftung des Kondensators 68 kann über eine Belüftungsleitung 69 und eine Luftpumpe 70 erfolgen.

Zur Entlastung der Luftpumpe kan auch anstelle des Hilfskondensators 68 ein Oberflächenkondensator Verwendung finden, der beispielsweise mit Kühlsole beaufschlagt wird.

In den einzelnen Mischkondensatorkreislaufschaltungen erfolgt die Rückkühlung der im Kreislauf geführten Kühllösung bzw. Kühllauge in den Rückkunlern 28, 36, 42, 48 bzw. 54 unter Verwendung von Kühlsole, die über eine Zulaufleitung 78 dem Rückkühler 54 zugeführt und über eine Ablaufleitung 79 den Rückkühler 28 wieder verläßt. Unter den hier gewählten Betriebsparametern hat die Kühlsole im Zulauf 78 — 3 °C und verläßt den Rückkühler 28 mit einer Temperatur von 0 °C in der Ablaufleitung 79.

Alternativ werden nach einer Ausgestaltung der Erfindung die Rückkühler 28, 36, 42, 48 und 54 vorzugsweise als Verdampfer, insbesondere Ammoniakverdampfer ausgebildet. Dabei werden die Verdampfer über die Zulaufleitung 78 mit homogenem flüssigem Ammoniak beaufschlagt, der über die Abzugsleitung 79 als Ammoniakdampf in die Kältemaschine rückgeführt wird. Dadurch erübrigt sich die für die Rückkühlung der Kühlsole erforderliche Aufstellung von Rückkühlern. Außerdem können bei gleichen Leistungskenndaten die Verdampfungsflächen wesentlich kleiner ausgebildet werden, bei den einzelnen Ammoniakverdampfern, wenn diese mit gleicher Ammoniakverdampfungstemperatur betrieben werden, da die im Kreislauf über die Kondensatoren 25, 31, 39, 45 und 51 umgewälzte Kühlflüssigkeit von Stufe zu Stufe zunehmend höhere Temperaturen hat. Dabei kann bei Anlagen mit größerer Kälteleistung auch mit zwei Kältemaschinen gearbeitet werden, wobei die Ammoniakverdampfer dann mit unterschiedlichen Temperaturen betrieben werden können, wodurch eine weitere Energieeinsparung erzielbar ist.

Statt der in der Fig. 1 gezeigten Reihenschaltung der Rückkühler 28, 36, 42, 48 und 54 können diese Rückkühler auch parallel oder blockweise parallel geschaltet werden, so daß dann entweder jeder Rückkühler getrennt oder jeder Rückkühlerblock getrennt mit Kühlmedium beaufschlagt werden können.

Zur Aufrechterhaltung der nach Maßgabe der erforderlichen Siedepunktserhöhung erforderlichen Solvendumkonzentration in den einzelnen Mischkondensatorkreisläufen, hier also zur Aufrechterhaltung der Natronlaugekonzentration in den Laugenkondensatoren, kann jedem der einzelnen separaten Laugenkreisläufe eine hochkonzentrierte Natronlauge über Zulaufleitungen 73, 74, 75, 76 und 77 zudosiert werden. Diese Zudosierung kann kontinuierlich oder diskontinuierlich erfolgen. Außerdem kann zusätzlich oder alternativ die Natronlaugekonzentration in den einzelnen Mischkondensatorkreisläufen durch eine Steuerung des Überlaufs geregelt werden.

Wird die über die Zulaufleitung 1 der in Fig. 1 gezeigten Anlage zugeführte Spinnbadlösung, wie in dem hier erläuterten Beispiel angenommen, insgesamt auf 0 °C abgekühlt, so muß im Laugenkondensator 51 mit einer 16-prozentigen Natronlauge gearbeitet werden. Diese Konzentration kann in den darauffolgenden Mischkondensatoren 45, 39, 31 und 25 zunehemend geringer werden, und zwar in dem Maße, daß die in der Kette ständig überlaufende Natronlauge schließlich in der Ablaufleitung 60 am Mischkondensator 25 durch ken kondensierten Wasserdampf nur noch eine Konzentration von 10 Gew.-% hat. Diese 10-prozentige Natronlauge eignet sich ideal zur Abluftreinigung, insbesondere zur Reinigung der in Viskosespinnereien entstehenden Abluft.

Das vorstehend im einzelnen beschriebene Verfahren und die Anlage zur mehrstufigen Mischkondensation von Dämpfen ermöglicht im Fall der Kondensation von Spinnbadbrüden mit den im vorstehend erläuterten Beispiel angenommenen Betriebsparametern jedoch nicht nur eine spürbare Erniedrigung der Natronlaugekonzentration, sondern erfordert auch nur eine um insgesamt etwa 40 % geringere Natronlaugemenge, die im Kreislauf gehalten zu werden braucht, wenn die entsprechenden Durchlaufwerte mit den Durchlaufwerten verglichen werden, die für den Betrieb bei einmaligem Natronlaugedurchlauf in hintereinandergeschalteten Kondensatoren nach dem Stand der Technik erforderlich sind.

Auch können die Kühlflächen der Laugenrückkühler 28, 36, 42, 48 bzw. 54 gegenüber den im Stand der Technik erforderlichen Kühlflächen spürbar kleiner ausgelegt werden, da die aus den Laugenmischkondensatoren ablaufende Kreislauflösung entsprechend der zunehmend höheren Brüdentemperatur in den zugeordneten Stufen des Vakuumkristallisators auf zunehmend höherer Temperatur gehalten werden können.

## Patentansprüche

1. Verfahren zur mehrstufigen Mischkondensation von Dämpfen mit Kühllösungen, wobei jeder Kondensationsstufe ein separater Mischkondensator zugeordnet ist, dadurch gekennzeichnet, daß die Kühllösung in jeder Kondensationsstufe über den jeweils zugeordneten Mischkondensator in einem eigenen Kreislauf geführt wird, und daß der Überlauf aus jedem Mischkondensatorkreislauf in den nächst wärmeren Mischkondensatorkreislauf überführt und die überlaufende verdünnte Kühllösung erst aus dem wärmsten Mischkondensatorkreislauf ausgetragen wird.

2. Verfahren nach Anspruch 1, dadurch gekennzeichnet, daß die Konzentration der Kühllösung in jedem Mischkondensatorkreislauf unter Führung durch die benötigte Siedepunktserhöhung durch Zudosieren von Solvendum oder konzentrierter Lösung und/oder Überlaufsteuerung geregelt wird.

3. Verfahren nach einem der Ansprüche 1 oder 2, dadurch gekennzeichnet, daß die Kühllösung in jedem Mischkondensatorkreislauf durch Kühlsole oder in einem Verdampfer indirekt rückgekühlt wird.

4. Verfahren nach einem der Ansprüche 1 bis 3, dadurch gekennzeichnet, daß die zu kondensierenden Dämpfe aus dem Regenerierungsprozeß von Spinnbadflüssigkeit aus Viskosespinnanlagen stammen und die Kühllösung Natronlauge ist.

5. Verfahren nach Anspruch 4, dadurch gekennzeichnet, daß die aus dem wärmsten Mischkondensatorkreislauf überlaufende Natronlauge eine Konzentration von angefähr 10 Gew.-% hat.

6. Verfahren nach einem der Ansprüche 4 oder 5, dadurch gekennzeichnet, daß die aus dem wärmsten Mischkondensatorkreislauf überlaufende Natronlauge zur Abluftreinigung eingesetzt wird.

7. Anlage zur mehrstufigen Mischkondensation von Dämpfen mit Kühllösungen, wobei jeder Kondensationsstufe ein separater Mischkondensator zugeordnet ist, gekennzeichnet durch eine separat jedem Mischkondensator (25 ; 31 ; 39 ; 45 ; 51) zugeordnete Kreislaufschaltung (26, 29 ; 34, 37 ; 40, 43 ; 46, 49 ; 52, 55) für die Kühllösung und mindestens eine Überlaufleitung (56 ; 57 ; 58 ; 59), für einen Kühllösungsüberlauf aus einem Mischkondensatorkreislauf in den nächst wärmeren Mischkondensatorkreislauf.

8. Anlage nach Anspruch 7, dadurch gekennzeichnet, daß zur Rückkühlung in den Mischkondensatorkreislaufschaltungen ein Verdampfer eingeschaltet ist.

9. Verwendung des Verfahrens nach einem der Ansprüche 1 bis 6 bzw. der Anlage nach einem der Ansprüche 7 oder 8 bei dem Regenerieren von Spinnbadflüssigkeit aus Viskosespinnanlagen in mehreren in Reihe geschalteten Vakuumkristallisatoren.

## Claims

1. A method for the multiple stage co-condensing of vapors by coolants in which each condensation stage comprises a separate co-condenser, characterized in that the coolant is cycled in each condensation stage in a circulation system of its own through the respective co-condenser, the overflow of each co-condenser circulation system is fed into the co-condenser circulation system operated at the next higher temperature, and the overflowing diluted coolant is discharged just from the co-condenser circulation system operated at the highest temperature.

2. A method according to claim 1, characterized in that the concentration of the coolant in each co-condenser circulation system is controlled by metered addition of the substance to be solved or of the concentrated solution and/or by regulation of the overflow according to the required boiling point elevation.

3. A method according to claim 1 or 2, characterized in that the coolant of each co-condenser circulation system is re-cooled by a cooling liquid or by a condenser indirectly.

4. A method according to claim 1, 2 or 3, characterized in that the vapors to be condensed originate from viscose spinning plants and the coolant is sodium hydroxide solution.

5. A method according to claim 4, characterized in that the sodium hydroxide solution overflowing from the co-condenser circulation system operated at the highest temperature has a concentration of about 10 % by mass.

6. A method according to claim 4 or 5, characterized in that the sodium hydroxide solution overflowing from the co-condenser circulation system operated at the highest temperature is used for exhaust air purification.

7. An apparatus for the multiple stage co-condensing of vapors by coolants in which each condensation stage comprises a separate co-condenser, including a separate coolant circulation system (26, 29 ; 34, 37 ; 40, 43 ; 46, 49 ; 52, 55) for each co-condenser (25 ; 31 ; 39 ; 45 ; 51) and at least one overflow pipe (56 ; 57 ; 58 ; 59) for a coolant overflow from one co-condenser circulation system to the adjacent one operated at the next higher temperature.

8. An apparatus according to claim 7, characterized in that a condenser is inserted into the co-condenser circulation systems for re-cooling.

9. The use of the method according to one of the claims 1 to 6 respectively according to the apparatus of claims 7 or 8 for the recuperation of spinbath solutions of viscose spinning plants by several vacuum crystallizers connected in series.

## Revendications

1. Procédé de co-condensation de vapeurs à plusieurs étages comportant l'utilisation de solutions réfrigérantes, dans lequel à chaque étage de condensation est associé un condenseur de mélange séparé, caractérisé en ce qu'à chaque étage de condensation la solution réfrigérante passe dans le condenseur de mélange correspondant pour circuler dans un circuit qui lui est propre et en ce que le trop-plein provenant de chaque circuit de condenseur de mélange est envoyé dans le circuit de condenseur de mélange dont la température est la plus voisine, la solution réfrigérante diluée évacuée en trop-plein ne provenant que du circuit de condenseur de mélange le plus chaud.

2. Procédé selon la revendication 1, caractérisé en ce que, dans chaque circuit de condenseur de mélange, la concentration de la solution réfrigérante, compte tenu de la nécessité d'élever le point d'ébullition, est réglée par addition de corps à dissoudre ou de solution concentrée et/ou par réglage du trop-plein.

3. Procédé selon l'une des revendications 1 ou 2, caractérisé en ce que, dans chaque circuit de condenseur de mélange, la solution réfrigérante est réfrigérée indirectement en retour par des sols réfrigérants ou dans un évaporateur.

4. Procédé selon l'une des revendications 1 à 3, caractérisé en ce que les vapeurs à condenser proviennent de la régénération du bain de filature d'installations de filature de viscose et que la solution réfrigérante est de la lessive de soude.

5. Procédé selon la revendication 4, caractérisé en ce que la lessive de soude qui sort en trop-plein du circuit de condenseur de mélange le plus chaud a une concentration d'environ 10 % en poids.

6. Procédé selon l'une des revendications 4 ou 5, caractérisé en ce que la lessive de soude qui sort en trop-plein du circuit de condenseur de mélange le plus chaud est utilisée pour l'épuration de l'air évacué.

7. Installation pour la co-condensation de vapeurs à plusieurs étages comportant l'utilisation de solutions réfrigérantes, dans laquelle chaque étage de condensation est associé à un condenseur de mélange séparé, caractérisée par un dispositif (26, 29 ; 34, 37 ; 40, 43 ; 46, 49 ; 52, 55) de commutation de circuit associé à chaque condenseur de mélange (25 ; 31 ; 39 ; 45 ; 51) pour la solution réfrigérante et au moins une canalisation de trop-plein (56 ; 57 ; 58 ; 59) pour le passage du trop-plein de solution réfrigérante d'un circuit de condenseur de mélange dans le circuit de condenseur de mélange dont la température est la plus voisine en étant plus élevée.

8. Installation selon la revendication 7, caractérisée en ce que la réfrigération en retour dans les dispositifs de commutation des circuits de condenseur de mélange est assurée par un évaporateur.

9. Utilisation du procédé selon l'une des revendications 1 à 6 ou de l'installation selon l'une des revendications 7 ou 8 pour la régénération d'un bain de filature d'installation de filature de viscose dans plusieurs cristallisoirs sous vide montés en série.

**0 127 722**

Fig.1